# EUROPEAN PATENT APPLICATION

(11) **EP 4 842 103 A1**
(43) Date of publication of application: **18.11.2026**
(21) Application number: 24916543.2
(22) Date of filing: 01.11.2024
(51) Int. Cl.: H04W 72/0453, H04B 10/077

(54) **DISTRIBUTED ANTENNA SYSTEM AND BAND LICENSING METHOD THEREFOR**

(30) Priority: 09.01.2024 CN 202410032169
(71) Applicant: PROSE Technologies (Suzhou) Co., Ltd., Suzhou, Jiangsu 215000 (CN)
(72) Inventor: XU, Renzhen, Jiangsu 215000 (CN); ZHU, Botao, Jiangsu 215000 (CN); WANG, Xiuping, Jiangsu 215000 (CN); FAN, Cunxiao, Jiangsu 215000 (CN)
(74) Representative: Isarpatent
(86) International application number: PCT/CN2024/129264
(87) International publication number: WO 2025/148492

(57) **Abstract**

The present disclosure provides a distributed antenna system and a frequency band licensing method thereof. The distributed antenna system includes a near-end device and one or more remote devices connected to the near-end device. The frequency band licensing method includes obtaining an activation code for a frequency band to be licensed by the near-end device; obtaining frequency band licensing information based on the activation code; and then notifying the one or more remote devices to activate the radio frequency link corresponding to the frequency band information in the frequency band licensing information.

## Description

### TECHNICAL FIELD

The present disclosure generally relates to the field of communications and, more particularly, to a distributed antenna system and a frequency band licensing method.

### BACKGROUND

Indoor wireless signal coverage refers to the coverage method for indoor locations such as residential buildings, subways, airports, stadiums, hotels, and shopping malls. With the widespread adoption of fifth-generation mobile communication (5G) technology, approximately 85% of mobile traffic will occur indoors, making indoor wireless signal coverage crucial for the user experience of 5G indoor applications. However, due to the low penetration and susceptibility to interference of 5G millimeter waves during spatial transmission, coupled with the numerous obstructions, strong interference, and complex environments indoors, outdoor base station coverage solutions are less effective. Therefore, a mobile communication network known as a distributed antenna system can be constructed for indoor wireless coverage.

A distributed antenna system typically includes multiple spatially separated antenna nodes or components, transmitting signals from a signal source to a remote location through various signal transmission media. Distributed antenna systems usually have a multi-level architecture, including a near-end device and multiple remote devices. The near-end device obtains radio frequency signals from signal sources such as base stations and transmits the obtained radio frequency signals to the remote devices via optical fiber. The remote devices are located in areas where signal coverage needs to be expanded or enhanced to communicate directly with users' mobile terminals.

Distributed antenna systems support multiple frequency bands in hardware, but to reduce early operating costs, some operators initially only need a subset of frequency bands, expanding the range as the market matures or expands. Therefore, a frequency band licensing method for distributed antenna systems is needed to selectively open certain frequency bands while locking other frequency bands supported by the product hardware. If needed later, customers can purchase licenses for other frequency bands and then activate the corresponding bands.

### SUMMARY

The present disclosure aims to provide a distributed antenna system and its frequency band licensing method, which are used to realize the frequency band licensing function of the distributed antenna system and meet the customer's demand for selectively opening up some frequency bands.

The technical solution provided by the present disclosure is as follows:

A frequency band licensing method for a distributed antenna system including a near-end device and one or more remote devices, the one or more remote devices being connected to the near-end device, wherein the frequency band licensing method includes:
obtaining, by the near-end device, an activation code for a frequency band to be licensed;
obtaining, by the near-end device, frequency band licensing information based on the activation code; and
notifying, by the near-end device, the one or more remote devices to activate a radio frequency link corresponding to frequency band information in the frequency band licensing information.

In some embodiments, the distributed antenna system further includes one or more relay devices connected to the near-end device, and each of the one or more remote devices being connected to the near-end device through one of the one or more relay devices;
the activation code is a ciphertext containing the frequency band licensing information; and the method further includes:
obtaining, by the near-end device, the frequency band licensing information by decrypting the activation code; and
sending, by the near-end device, a frequency band activation message to the one or more relay devices, the frequency band activation message containing the frequency band information from the frequency band licensing information, and
the one or more relay devices notifying the one or more remote devices connected therewith to activate the radio frequency link corresponding to the frequency band information.

In some embodiments, the frequency band activation message further includes an activation code type; and
the one or more relay devices notifying the one or more remote devices connected therewith to activate the radio frequency link corresponding to the frequency band information includes:
when the activation code type is a standard version, the one or more relay devices notifying the one or more remote devices connected therewith to activate the radio frequency link corresponding to the frequency band information; or
when the activation code type is a professional version, the one or more relay devices notifying the one or more remote devices connected therewith to activate both the radio frequency link and a maintenance link corresponding to the frequency band information.

In some embodiments, the frequency band licensing information further includes a number of the one or more remote devices; and
the frequency band activation message further includes the number of the one or more remote devices in the frequency band licensing information; and
the one or more relay devices notifying the one or more remote devices connected therewith to activate the radio frequency link corresponding to the frequency band information includes: a quantity of the one or more remote devices being notified by the one or more relay devices is not greater than the number of the one or more remote devices in the frequency band licensing information.

In some embodiments, the frequency band licensing information further includes identification codes of the one or more relay devices; and
sending, by the near-end device, the frequency band activation message to the one or more relay devices includes: sending, by the near-end device, the frequency band activation message to the one or more relay devices with a specified identification code in the frequency band licensing information.

The present disclosure further provides a frequency band licensing method for a distributed antenna system including a near-end device, one or more relay devices connected to the near-end device, and one or more remote devices connected to each of the one or more relay devices, wherein the frequency band licensing method includes:
obtaining, by the one or more relay devices, the activation code for the frequency band to be licensed, and obtaining the frequency band licensing information based on the activation code; and
notifying, by the one or more relay devices, the one or more remote devices connected to the one or more relay devices to activate a radio frequency link corresponding to frequency band information in the frequency band licensing information.

The present disclosure further provides a frequency band licensing method for a distributed antenna system including a network management center and one or more sets of distributed antenna apparatuses, each of the one or more sets of distributed antenna apparatuses including a near-end device and one or more remote devices connected to the near-end device, wherein the frequency band licensing method includes:
obtaining, by the network management center, identification codes of the one or more sets of distributed antenna apparatuses and an activation code for a frequency band to be licensed in the one or more sets of distributed antenna apparatuses identified by the identification codes;
sending, by the network management center, a first activation message to a target set of the one or more sets of distributed antenna apparatuses with a specified identification code, the first activation message including the activation code for the frequency band to be licensed;
receiving, by the near-end device of the target set of distributed antenna apparatuses with the specified identification code, the first activation message and obtaining the activation code for the frequency band to be licensed from the first activation message; and
activating, by the near-end device of the target set of distributed antenna apparatuses with the specified identification code, a radio frequency link in the target set of distributed antenna apparatuses corresponding to frequency band information according to the activation code for the frequency band to be licensed.

In some embodiments, the frequency band licensing method further includes:
obtaining, by the network management center, a license term of the frequency band to be licensed,
wherein the first activation message further includes the license term of the frequency band to be licensed;
receiving, by the near-end device of the target set of distributed antenna apparatuses, the first activation message, and obtaining the activation code of the frequency band to be licensed and the license term of the frequency band from the first activation message; and
activating, by the near-end device of the target set of distributed antenna apparatuses, the radio frequency link in the target set of distributed antenna apparatuses corresponding to the frequency band information according to the activation code of the frequency band to be licensed, and issuing a corresponding prompt message when the license term of the frequency band is approaching expiration.

The present disclosure further provides a distributed antenna system, wherein the distributed antenna system comprises a near-end device and one or more remote devices connected with the near-end device,
and wherein the near-end device obtains an activation code for a frequency band to be licensed, obtains frequency band licensing information based on the activation code, and notifies the one or more remote devices to activate a radio frequency link corresponding to frequency band information in the frequency band licensing information.

The present disclosure further provides a distributed antenna system, wherein the distributed antenna system comprises a near-end device, one or more relay devices connected with the near-end device, and one or more remote devices connected with each of the one or more relay devices,
and wherein the one or more relay devices obtain an activation code for a frequency band to be licensed, obtain frequency band licensing information based on the activation code, and notifies the one or more remote devices connected therewith to activate a radio frequency link corresponding to frequency band information in the frequency band licensing information.

The present disclosure further provides a distributed antenna system, wherein the distributed antenna system comprises a network management center and one or more sets of distributed antenna apparatuses, each of the one or more sets of distributed antenna apparatuses including a near-end device and one or more remote devices connected to the near-end device,
and wherein the network management center obtains identification codes of the one or more sets of distributed antenna apparatuses and an activation code for a frequency band to be licensed in the one or more sets of distributed antenna apparatuses identified by the identification codes, and sends a first activation message to a target set of the one or more sets of distributed antenna apparatuses with a specified identification code, the first activation message including the activation code for the frequency band to be licensed;
and wherein the near-end device of the target set of distributed antenna apparatuses with the specified identification code receives the first activation message and obtains the activation code for the frequency band to be licensed from the first activation message, and activates a radio frequency link in the target set of distributed antenna apparatuses corresponding to frequency band information according to the activation code for the frequency band to be licensed.

Compared with the existing technology, the distributed antenna system and its frequency band licensing method provided by the present disclosure can at least bring the following beneficial effects:
The present disclosure realizes the frequency band licensing function of the distributed antenna system, meeting the customer's demand for selectively opening up some frequency bands to reduce the initial operating costs of the operator. The present disclosure provides multiple frequency band licensing methods. It is possible to either go to the site and activate the frequency band to be licensed through the near-end device or the relay device, or to do so without going to the site and remotely activate the frequency band to be licensed through the network management center. There is no need to restart or change the hardware of the deployed devices. Once the frequency band is activated, it can immediately output the corresponding frequency band's radio frequency signal without affecting the use of the devices already on the network, it's fast and efficient.

### BRIEF DESCRIPTION OF THE DRAWINGS

The embodiments of the present disclosure will be described below in a clear and understandable manner, in conjunction with the accompanying drawings, to further explain the above-mentioned characteristics, technical features, advantages, and implementation methods of the distributed antenna system and the frequency band licensing methods.
FIG. 1 is a flowchart of the frequency band licensing method of the distributed antenna system of the present disclosure.
FIG. 2 is another flowchart of the frequency band licensing method of the distributed antenna system of the present disclosure.
FIG. 3 is another flowchart of the frequency band licensing method of the distributed antenna system of the present disclosure.
FIG. 4 is another flowchart of the frequency band licensing method of the distributed antenna system of the present disclosure.
FIG. 5 is a structural schematic diagram of the distributed antenna system of the present disclosure.
FIG. 6 is another structural schematic diagram of the distributed antenna system of the present disclosure.
FIG. 7 is another structural schematic diagram of the distributed antenna system of the present disclosure.

### DETAILED DESCRIPTION OF THE EMBODIMENTS

To more clearly illustrate the technical solutions in the embodiments of the present disclosure, the specific embodiments of the present disclosure will be described below with reference to the accompanying drawings. Obviously, the drawings described below are merely some embodiments of the present disclosure. For those skilled in the art, other drawings and other embodiments can be obtained based on these drawings without creative effort.

For the sake of simplicity, each figure only schematically shows the parts related to the present disclosure, and does not represent actual structure of a product. Furthermore, for the sake of simplicity and ease of understanding, in some figures, components with the same structure or function are only schematically depicted, or only one is labeled. In the present disclosure, "one" not only means "only one," but can also mean "more than one."

As mentioned above, distributed antenna systems typically support multiple frequency bands in hardware, but some operators initially use only a few frequency bands, expanding the frequency range as the market matures. Therefore, the present disclosure provides a frequency band licensing method for distributed antenna systems.

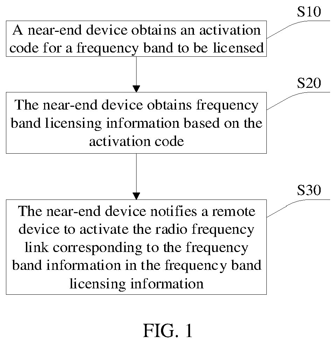

Consistent with the present disclosure, as shown in FIG. 1, a frequency band licensing method for a distributed antenna system includes the following.

S10, a near-end device obtains an activation code for a frequency band to be licensed;
S20, the near-end device obtains frequency band licensing information based on the activation code;
S30, the near-end device notifies a remote device to activate the radio frequency link corresponding to the frequency band information in the frequency band licensing information.
Specifically, the distributed antenna system includes a near-end device (Power Balanced Master Unit, PBMU) and one or more remote devices (Integrated Remoted Unit, IRUs) connected to the near-end device. The near-end device can be connected to the remote device via optical fiber.

The activation code is generally used to verify the legitimacy of a user. Consistent with the present disclosure, the activation code is configured to ensure that legitimate users use the system's frequency band resources within a reasonable range. For example, if a user purchases product A in frequency band B, the corresponding activation code can only be used to activate the resources of product A in frequency band B for the user.

The activation code is generated by the equipment manufacturer according to certain rules. The equipment manufacturer generates the corresponding activation code based on the frequency band resources purchased by the user, and then sends the activation code to the user. The user uses the activation code to activate the corresponding frequency band resources of the purchased product. Consistent with the present disclosure, the user can input the activation code for the frequency band to be licensed via the web interface of the near-end device, and then authorize to activate the frequency band resources. Upon receiving the instruction, the near-end device automatically activates the corresponding frequency band resources using the method provided in the present disclosure.

The activation code includes frequency band licensing information, and the frequency band licensing information includes information about the frequency band to be licensed. Generally, the activation code is encrypted version of the frequency band licensing information; that is, the frequency band licensing information is encrypted to obtain the activation code. To retrieve the frequency band licensing information from the activation code, the activation code needs to be decrypted first.

The PBMU obtains the frequency band licensing information from the activation code, and then activates the radio frequency links of licensed frequency bands in the IRU and deactivates the radio frequency links of unlicensed frequency bands according to the frequency band licensing information; or the PBMU notifies the IRU of the frequency band licensing information, and the IRU activates the radio frequency links of licensed frequency bands and deactivates the radio frequency links of unlicensed frequency bands.

The present disclosure provides a method for activating a frequency band to be licensed through a near-end device. The method can locally activate frequency bands with purchased licenses, realizing the frequency band licensing function of a distributed antenna system and meeting the customer's need for selectively opening up certain frequency bands.

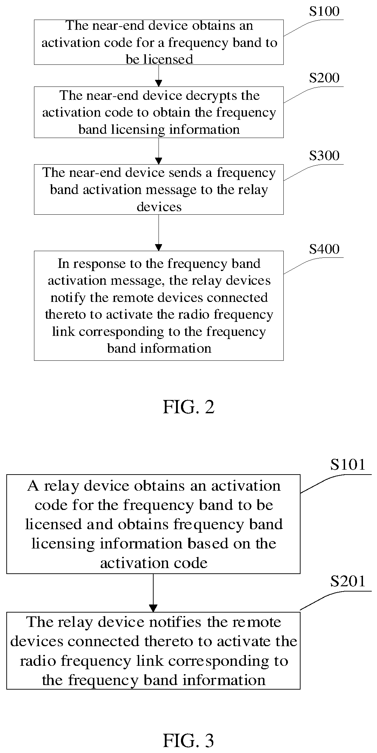

In another embodiment of the present disclosure, as shown in FIG. 2, a frequency band licensing method for a distributed antenna system includes the following.

The distributed antenna system includes a near-end device (Power Balanced Master Unit, PBMU), one or more relay devices (Network Expand Unit, NEUs) connected to the near-end device, and one or more remote devices (Integrated Remoted Unit, IRUs) connected to each relay device.

S100, the near-end device obtains an activation code for a frequency band to be licensed, the activation code being a ciphertext containing frequency band licensing information;
S200, the near-end device decrypts the activation code to obtain the frequency band licensing information;
S300, the near-end device sends a frequency band activation message to the relay devices, the frequency band activation message containing the frequency band information from the frequency band licensing information;
S400, in response to the frequency band activation message, the relay devices notify the remote devices connected to the relay devices to activate the radio frequency link corresponding to the frequency band information.

Specifically, the near-end device can be connected to the relay device via optical fiber, and the relay device can be connected to the remote device via optical fiber. Near-end devices acquire radio frequency signals from signal sources such as base stations and transmit the obtained radio frequency signals to remote devices via relay device, thereby enhancing signal coverage.

In the PBMU-NEU-IRU system architecture, frequency band licensing information is managed centrally by the PBMU. The PBMU sends the frequency band licensing information to the NEU, the NEU then activates the radio frequency links for licensed frequency bands within the IRU and deactivates the radio frequency links for unlicensed frequency bands within the IRU based on the licensing information.

Each frequency band of each PBMU corresponds to a unique license. Frequency bands can be uniquely identified based on the frequency band information, for example, frequency band information can be identified by using a frequency band code. Frequency band licensing information can include only the frequency band information to be licensed, or the frequency band licensing information can be bound to the frequency band information and the identification code of the near-end device, indicating that activation of the specified frequency band information is limited to the distributed antenna system identified by the near-end device with the specified identification code. This means that all radio frequency links corresponding to the specified frequency band information in all IRUs within that system can be activated.

The device identification code can be the device serial number (SN), the identification code of a key component of the device, or a combination of identification codes for multiple key components, as long as the serial number (SN), identification code, or combination of identification codes uniquely identifies the device.

Frequency band licensing information generates a corresponding activation code through an encryption algorithm. For example, the plaintext information might be frequency band A and the PBMU's identification code; after encryption, the activation code for frequency band A of the system in the present disclosure is obtained. An encryption algorithm can be selected from existing technologies as needed.

Users can input the activation code for the frequency band to be licensed via the web interface of the near-end device, or input a license file, the PBMU extracts the frequency band activation code from the license file. After the frequency band activation code is obtained, the near-end device decrypts the activation code to obtain the corresponding plaintext information, and retrieve the frequency band licensing information from the plaintext information. For example, the frequency band licensing information includes the frequency band information and the near-end device's identification code. If decryption fails, the activation code is invalid. If decryption is successful, the near-end device can further check if the identification code of that near-end device in the frequency band licensing information matches the identification code of the near-end device itself. If the identification codes don't match, the obtained activation code cannot be used in this distributed antenna system. If the identification codes match, the near-end device sends the specified frequency band information to the relay device via frequency band activation information. The relay device then notifies the remote device. The remote device supports radio frequency links for all frequency bands, and frequency bands are in a disabled state by default. Upon receiving the specified frequency band information from the relay device, the remote device then opens the radio frequency link corresponding to the specified frequency band information. Specifically, an radio frequency switch can be used to activate/deactivate the corresponding radio frequency link by turning the radio frequency switch on/off.

In the above technical solutions, the signal terminals of the near-end device and the relay device can output normally. For inactive frequency bands, the radio frequency switch on the remote IRU is turned off; for active frequency bands, the radio frequency switch on the remote IRU is turned on. In some embodiments, the signal of inactive frequency bands can also be turned off on the near-end device, this allows for the radio frequency link in the relevant frequency bands to be turned off without turning off the signal on the remote device.

Users can check the authorization status of frequency bands on the web interface of the near-end device. The web interface can display all frequency bands supported by the system, with authorized and unauthorized bands distinguished by different colors or text, or display only authorized bands.

Users can authorize bands on the near-end device's web interface by adding band activation codes or band license files. Each authorization operation authorizes only one band; multiple authorization operations are needed for multiple bands of the same PBMU.

When a band channel is unauthorized, the related monitoring data will be masked and not displayed.

In one embodiment, frequency band activation codes are divided into professional and standard versions. The standard version activation code only activates the radio frequency link of the frequency band, while the professional version activation code activates both the radio frequency link and the maintenance link of the frequency band. The maintenance link is configured to report relevant parameters of the frequency band to the network management center for users to adjust. For example, if the relevant parameters of the frequency band are transmitted via an optical link, activating the optical link is equivalent to activating the maintenance link.

The step S300 includes, S310, the near-end device identifies the type of activation code, and sends a frequency band activation message to the relay device containing the frequency band information to be licensed and the activation code type.

The step S400 includes, S410, the relay device notifies the remote device connected to the relay device to activate the radio frequency link corresponding to the frequency band information; if the activation code type is professional version, the relay device and the remote device connected to the relay device also activate the maintenance link corresponding to the frequency band information.

In one embodiment, the frequency band licensing information also includes the number of remote devices. The number of remote devices can be directly represented by quantity, for example, if a user initially purchases only 10 IRUs, then only the frequency bands on those 10 IRUs are activated; later, if the number is expanded to 50 IRUs, the frequency bands on all 50 IRUs can be activated by purchasing frequency band licenses. The number of remote devices can also be represented by levels, such as Class I being 10 IRUs, Class II being 20 IRUs, etc.

Specifically, the step S300 includes, S320, the near-end device sends a frequency band activation message to the relay device, the frequency band activation message containing the frequency band information to be licensed and the number of remote devices.

The step S400 includes, S420, the relay device notifies up to a number of remote devices connected to the relay device, not exceeding the total number of the remote devices, to activate the radio frequency link corresponding to the frequency band information.

This method limits the activation of the radio frequency link of a specified frequency band for a specified number of remote devices. This allows for different selling prices to be applied to different numbers of remote devices, even when activating the same frequency band.

In one embodiment, the frequency band licensing information also includes the identification codes of one or more remote devices.

Specifically, the step S300 includes, S330, the near-end device sends a frequency band activation message to the relay device, the frequency band activation message containing the frequency band information to be licensed and the identification codes of one or more remote devices.

The step S400 includes, S430, the relay device notifies all remote devices with the same identification codes as the remote devices in the frequency band activation message to activate the radio frequency link corresponding to the frequency band information.

This method activates only the radio frequency link on the remote device with the specified identification code. This method also allows for activating the same frequency band but using different prices for different numbers of remote devices.

This method binds the IRU's identification code. When the optical port of the IRU bound to the identification code malfunctions, the IRU can be connected to another available optical port to continue operation.

In one embodiment, the frequency band licensing information also includes one or more optical port numbers of optical ports connected to remote devices.

Specifically, the step S300 includes, S340, the near-end device sends a frequency band activation message to the relay device. The frequency band activation message includes the frequency band information to be licensed and one or more optical port numbers of optical ports connected to remote devices.

The step S400 includes, S440, the relay device notifies the remote device connected to the optical port indicated by the optical port number in the frequency band activation message to activate the radio frequency link corresponding to the frequency band information.

In this method, the activation code is bound to the optical port number. Only remote devices under the specified optical port number can activate the corresponding frequency band. When an IRU under the specified optical port fails, a new IRU can be directly replaced at the original optical port to continue operation without reactivation.

In one embodiment, the frequency band licensing information also includes identification codes for one or more relay devices.

Specifically, the step S300 includes, S350 the near-end device sends a frequency band activation message to the relay device with the specified identification code in the frequency band licensing information.

In this way, the activation code is bound to the relay device's identification code, and only the remote device connected to the relay device with the specified identification code can activate the radio frequency link of the specified frequency band.

This method allows remote devices under different relay devices to activate different frequency bands. For example, a distributed antenna system has one PBMU, the PBMU is full-band, and two NEUs. The IRU device under NEU1 activates the N77 frequency band, and the IRU device under NEU2 activates the B20 frequency band. In this case, two activation codes are needed, one is a combination of the N77 frequency band, the identification code of NEU1, and the identification code of the PBMU; the other is a combination of the B20 frequency band, the identification code of NEU2, and the identification code of the PBMU. Activating these two activation codes on the PBMU separately achieves the above objectives.

In one embodiment, the frequency band licensing information also includes the number of optical ports connected to the remote device.

Specifically, the step S300 includes, S360, the near-end device sends a frequency band activation message to the relay device. The frequency band activation message includes the frequency band information to be licensed and the number of optical ports connected to the remote device.

The step S400 includes, S460, the relay device notifies the remote devices with no more than the number of optical ports connected to the remote device to activate the radio frequency link corresponding to the frequency band information.

This method controls the number of remote devices activated by the frequency band by controlling the number of optical ports connected to the remote device.

In one embodiment, the frequency band licensing information also includes the number of relay devices or the number of optical ports connected to the relay devices.

The near-end device, based on the frequency band licensing information, controls a specified number of relay devices to receive the frequency band activation message, or controls a specified number of relay devices with specified optical ports to receive the frequency band activation message.

The present disclosure, by providing various types of frequency band licensing information (equivalent to various activation codes), allows for frequency band licensing in various scenarios through the near-end device, meeting the needs of various customers. During frequency band activation, there is no need to restart or modify the hardware of already deployed devices. Radio frequency signals are output immediately after activation, without affecting the use of existing network devices. The activation operation is simple, fast, and efficient.

In another embodiment of the present disclosure, consistent with the present disclosure, FIG. 3 illustrates a frequency band licensing method for a distributed antenna system, including the following.

The step S101, a relay device obtains an activation code for the frequency band to be licensed and obtains frequency band licensing information based on the activation code;
The step S201, the relay device notifies the remote devices connected thereto to activate the radio frequency link corresponding to the frequency band information in the frequency band licensing information.

Specifically, the distributed antenna system includes a near-end device (PBMU), one or more relay devices (NEUs) connected to the near-end device, and one or more remote devices (IRUs) connected to each relay device.

At the relay device end, the activation code for the frequency band to be licensed is directly input. The relay device obtains the frequency band licensing information based on the activation code, and the frequency band licensing information includes the frequency band information to be licensed. The relay device notifies the remote devices connected thereto to activate the radio frequency link corresponding to the frequency band information to be licensed.

The remote devices support radio frequency links for all frequency bands, and these radio frequency links are disabled by default. Upon receiving activation information from the relay devices, the remote devices then activate the corresponding radio frequency links.

To activate multiple frequency bands, multiple activation operations can be performed, with one frequency band being activated in each operation. In some embodiments, multiple frequency band information can be input simultaneously, allowing the relay device to sequentially activate the corresponding radio frequency links of the remote devices.

This allows users to directly authorize bands and query authorization status the bands on the relay device.

In one embodiment, S101 includes, S111, the relay device obtains the activation code for the frequency band to be licensed, and obtains the frequency band licensing information and activation code type based on the activation code; the frequency band licensing information includes the frequency band information to be licensed.

The step S201 includes, S211, the relay device notifies the remote devices connected thereto to activate the radio frequency link corresponding to the frequency band information to be licensed; if the activation type is professional, the relay device and the remote devices connected thereto also activate the maintenance link corresponding to the frequency band information to be licensed.

In one embodiment, the step S101 includes, S121, the relay device obtains the activation code for the frequency band to be licensed, and obtains the frequency band licensing information based on the activation code; the frequency band licensing information includes the frequency band information to be licensed and the number of remote devices.

The step S201 includes, S221, the relay device notifies up to a number of remote devices connected to the relay device to activate the radio frequency link corresponding to the frequency band information to be licensed.

In one embodiment, the step S101 includes, S131, the relay device obtains the activation code for the frequency band to be licensed and obtains frequency band licensing information based on the activation code. The frequency band licensing information includes the frequency band information to be licensed and the identification codes of one or more remote devices.

The step S201 includes, S231, the relay device notifies all remote devices with specified identification codes to activate the radio frequency link corresponding to the frequency band information to be licensed.

In one embodiments, the step S101 includes, S141, the relay device obtains the activation code for the frequency band to be licensed and obtains frequency band licensing information based on the activation code. The frequency band licensing information includes the frequency band information to be licensed and the optical port numbers of one or more remote devices connected thereto.

The step S201 includes, S241, the relay device notifies remote devices connected to the optical port indicated by the specified optical port number to activate the radio frequency link corresponding to the frequency band information to be licensed.

In one embodiment, the step S101 includes, S151, the relay device obtains the activation code for the frequency band to be licensed, and obtains frequency band licensing information based on the activation code. The frequency band licensing information includes the frequency band information to be licensed and the number of optical ports connecting to the remote device.

The step S201 includes, S251, the relay device notifies the remote device with no more than a specified number of optical ports to activate the radio frequency link corresponding to the frequency band information to be licensed.

The present disclosure provides a method for frequency band licensing through a relay device, and the method can activate a frequency band with a purchased license at the relay device end. During frequency band activation, there is no need to restart or change the hardware of the deployed device. Radio frequency signals are output immediately after activation, without affecting the use of devices already in the network. The activation operation is simple, fast, and efficient.

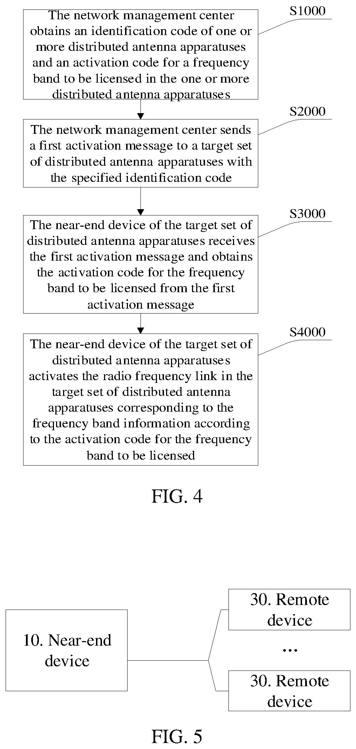

In another embodiment of the present disclosure, as shown in FIG. 4, a frequency band licensing method for a distributed antenna system includes the following.

The step S1000, the network management center obtains an identification code of the distributed antenna apparatus and an activation code for a frequency band to be licensed in the distributed antenna apparatus identified by the identification code. The activation code is a ciphertext containing frequency band licensing information; the frequency band licensing information includes frequency band information and an identification code of the near-end device of the distributed antenna apparatus;
The step S2000, the network management center sends a first activation message to a target set of distributed antenna apparatuses with the specified identification code. The first activation message includes the activation code for the frequency band to be licensed;
The step S3000, the near-end device of the target set of distributed antenna apparatuses receives a first activation message and obtains the activation code for the frequency band to be licensed from the first activation message;
The step S4000, the near-end device of the target set of distributed antenna apparatuses activates the radio frequency link in the target set of distributed antenna apparatuses corresponding to the frequency band information according to the activation code for the frequency band to be licensed.

Specifically, the distributed antenna system includes a network management center and one or more sets of distributed antenna apparatuses. Each set of distributed antenna apparatuses includes a near-end device, one or more relay devices connected to the near-end device, and one or more remote devices each connected to one of the one or more relay devices. The network management center has a wired or wireless connection with the near-end device of each distributed antenna apparatus.

The identification code of the distributed antenna apparatus is configured to uniquely identify the distributed antenna apparatus. The distributed antenna apparatus can be determined by the identification code of the important components of the distributed antenna apparatus, such as the identification code of the near-end device, or can be determined independently.

The step S4000 can adopt the frequency band licensing method through the near-end device in the aforementioned embodiments.

Users can query the frequency band licensing status and authorize frequency bands by adding a frequency band license through the network management center.

In one embodiment, the step S1000 includes, S1100, the network management center also obtains the license term of the frequency band to be licensed.

The step S2000 includes, S2100, the first activation message includes the activation code of the frequency band to be licensed and the license term of that frequency band.

The step S3000 includes, S3100, the near-end device of the target set of distributed antenna apparatuses receives the first activation message and obtains the activation code of the frequency band to be licensed and the license term of that frequency band from the first activation message.

The step S4000 includes, S4100, the near-end device of the target set of distributed antenna apparatuses activates the radio frequency link corresponding to the frequency band information in the target set of distributed antenna apparatuses according to the activation code of the frequency band to be licensed, and issues a corresponding prompt message when the license term of the frequency band is approaching expiration, and turns off the radio frequency link corresponding to the frequency band information after the license term of the frequency band expires.

The present disclosure provides a method for frequency band licensing through a network management center, and the method can remotely activate frequency bands with purchased licenses and set the frequency band license term. During frequency band activation, the devices currently running in the network are not affected, and there is no need to restart or change the hardware of deployed devices. The activation operation is simple, fast, and efficient. The user is prompted when the frequency band license term is about to expire.

In one embodiment of the present disclosure, consistent with the present disclosure, as shown in FIG. 5, a distributed antenna system 100 includes the following.

A near-end device 10 and one or more remote devices 30 connected to the near-end device 10.

The near-end device 10 is configured to obtain an activation code for a frequency band to be licensed, obtain frequency band license information according to the activation code, and notify the remote devices to activate the radio frequency link corresponding to the frequency band information in the frequency band license information.

The remote device 30 is configured to activate the radio frequency link corresponding to the frequency band information in the frequency band licensing information.

Consistent with the present disclosure, by activating the frequency band to be licensed through the near-end device, the frequency band with a purchased license can be activated locally, realizing the frequency band licensing function of the distributed antenna system and meeting the customer's need for selectively opening up certain frequency bands.

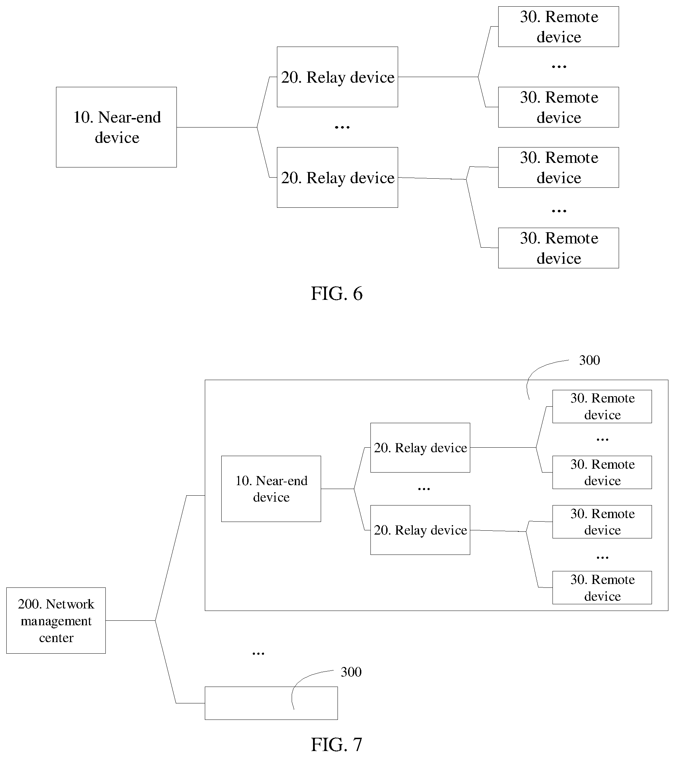

In one embodiment of the present disclosure, as shown in FIG. 6, a distributed antenna system 100 includes the following.

A near-end device 10, one or more relay devices 20 connected to the near-end device 10, and one or more remote devices 30 connected to each relay device 20.

Near-end device 10 is configured to acquire an activation code for a frequency band to be licensed, the activation code being a ciphertext containing frequency band licensing information; decrypt the activation code to obtain the frequency band licensing information; and send a frequency band activation message to a relay device, the frequency band activation message containing the frequency band information from the frequency band licensing information.

Relay device 20 is configured to, in response to the frequency band activation message, notify the remote device connected thereto to activate the radio frequency link corresponding to the frequency band information.

Remote device 30 is configured to activate the radio frequency link corresponding to the frequency band information.

In one embodiment, the frequency band activation code is divided into a professional version and a standard version. The standard version activation code only activates the radio frequency link, while the professional version activation code activates both the radio frequency link and the maintenance link of the frequency band.

Near-end device 10 is also configured to send a frequency band activation message to the relay device, the frequency band activation message containing the frequency band information to be licensed and the activation code type.

The relay device 20 is further configured to notify remote devices connected thereto to activate the radio frequency link corresponding to the frequency band information; if the activation code type is professional version, the relay device 20 is further configured to notify the remote devices connected thereto to activate the maintenance link corresponding to the frequency band information.

In one embodiment, the frequency band licensing information also includes the number of remote devices.

The near-end device 10 is further configured to send a frequency band activation message to the relay device, the frequency band activation message containing the frequency band information to be licensed and the number of remote devices.

The relay device 20 is further configured to notify a number of remote devices connected thereto, not exceeding the number of remote devices, to activate the radio frequency link corresponding to the frequency band information.

In one embodiment, the frequency band licensing information also includes the identification codes of one or more remote devices.

The near-end device 10 is further configured to send a frequency band activation message to the relay device, the frequency band activation message containing the frequency band information to be licensed and the identification codes of one or more remote devices.

The relay device 20 is further configured to notify all remote devices with the same identification codes as identification codes of the remote devices contained in the frequency band activation message to activate the radio frequency link corresponding to the frequency band information.

In one embodiment, the frequency band licensing information further includes one or more optical port numbers of optical ports connected to remote devices.

The near-end device 10 is further configured to send a frequency band activation message to the relay device, the frequency band activation message containing the frequency band information to be licensed and one or more optical port numbers of optical ports connected to remote devices.

The relay device 20 is further configured to notify remote devices connected to the optical ports indicated by the optical port numbers in the frequency band activation message to activate the radio frequency link corresponding to the frequency band information.

In one embodiment, the frequency band licensing information further includes identification codes for one or more relay devices.

The near-end device 10 is further configured to send the frequency band activation message to the relay device with the specified identification code in the frequency band licensing information.

In one embodiment, the frequency band licensing information further includes the number of optical ports connected to remote devices.

The near-end device 10 is further configured to send a frequency band activation message to the relay device, the frequency band activation message containing the frequency band information to be licensed and the number of optical ports connected to remote devices.

The relay device 20 is further configured to notify remote devices connected to no more than the number of optical ports connected to remote devices to activate the radio frequency link corresponding to the frequency band information.

In one embodiment, the frequency band licensing information further includes the number of relay devices or the number of optical ports connected to the relay devices.

The near-end device 10 is also configured to, based on the frequency band licensing information, control a specified number of relay devices to receive a frequency band activation message, or control a specified number of relay devices with specified optical ports to receive a frequency band activation message.

In one embodiment, as shown in FIG. 6, a distributed antenna system 100 includes the following.

A near-end device 10, one or more relay devices 20 connected to the near-end device, and one or more remote devices 30 connected to each relay device.

The relay device 10 is configured to obtain an activation code for a frequency band to be licensed, and obtain frequency band licensing information based on the activation code; and notify the remote devices connected to the relay device to activate the radio frequency link corresponding to the frequency band information in the frequency band licensing information.

In one embodiment, the relay device 10 is further configured to obtain an activation code for the frequency band to be licensed, and obtain frequency band licensing information and activation code type based on the activation code; the frequency band licensing information includes the frequency band information to be licensed; notify the remote devices connected to the relay device to activate the radio frequency link corresponding to the frequency band information to be licensed; if the activation type is professional version, the relay device and the remote devices connected thereto also activate the maintenance link corresponding to the frequency band information to be licensed.

In one embodiment, the relay device 10 is further configured to obtain an activation code for the frequency band to be licensed, and obtain frequency band licensing information based on the activation code, the frequency band licensing information including the frequency band information to be licensed and the number of remote devices; notify the remote devices connected to the relay device (not exceeding the number of remote devices) to activate the radio frequency link corresponding to the frequency band information to be licensed.

In one embodiment, the relay device 10 is further configured to obtain an activation code for the frequency band to be licensed, and obtain frequency band licensing information based on the activation code, the frequency band licensing information including the frequency band information to be licensed and the identification code of one or more remote devices; notify all remote devices with the same identification code as the remote device contained in the frequency band activation message to activate the radio frequency link corresponding to the frequency band information to be licensed.

In one embodiment, the relay device 10 is further configured to obtain an activation code for the frequency band to be licensed, and obtain frequency band licensing information based on the activation code. The frequency band licensing information includes the frequency band information to be licensed and one or more optical port numbers of optical ports connected to remote devices. The relay device 10 is configured to notifies remote devices connected to the optical port indicated by the specified optical port number to activate the radio frequency link corresponding to the frequency band information to be licensed.

In one embodiment, the relay device 10 is further configured to obtain an activation code for the frequency band to be licensed, and obtain frequency band licensing information based on the activation code. The frequency band licensing information includes the frequency band information to be licensed and the number of optical ports connected to remote devices. The relay device 10 then notifies remote devices connected to no more than the specified number of optical ports to activate the radio frequency link corresponding to the frequency band information to be licensed.

The present disclosure uses a relay device for frequency band licensing.

In another embodiment of the present disclosure, as shown in FIG. 7, a distributed antenna system includes the following.

A network management center 200 and one or more sets of distributed antenna apparatuses 300, each distributed antenna apparatus 300 including a near-end device 10, one or more relay devices 20 connected to the near-end device, and one or more remote devices 30 connected to each relay device.

The network management center 200 is configured to obtain an identification code of the distributed antenna apparatus and an activation code for a frequency band to be licensed in the distributed antenna apparatus corresponding to the identification code of the distributed antenna apparatus, the activation code being a ciphertext containing frequency band licensing information; the frequency band licensing information includes frequency band information and the identification code of the near-end device of the distributed antenna apparatus; and send a first activation message to a target set of distributed antenna apparatuses with a specified identification code, the first activation message including the activation code for the frequency band to be licensed;
The near-end device 10 of the distributed antenna apparatus 300 receives the first activation message, obtains the activation code for the frequency band to be licensed from the first activation message, and activates the radio frequency link in the target set of distributed antenna apparatuses corresponding to the frequency band information according to the activation code for the frequency band to be licensed.

In one embodiment, the network management center 200 is further configured to obtain the identification code of the distributed antenna apparatus, the activation code of the frequency band to be licensed in the distributed antenna apparatus corresponding to the identification code, and the license term of the frequency band to be licensed; and send a first activation message to the target set of distributed antenna apparatuses with the specified identification code, the first activation message including the activation code of the frequency band to be licensed and the license term of the frequency band.

The near-end device 10 of the distributed antenna apparatus 300 is further configured to receive the first activation message, obtain the activation code of the frequency band to be licensed and the license term of the frequency band from the first activation message; and, based on the activation code of the frequency band to be licensed, activates the radio frequency link corresponding to the frequency band information in the target set of distributed antenna apparatuses, and issues a corresponding prompt message when the frequency band's license term is approaching expiration. After the license term expires, the radio frequency link corresponding to the frequency band information is shut down.

It should be noted that the embodiment of the distributed antenna system and the aforementioned embodiment of the frequency band licensing method for a distributed antenna system in the present disclosure are both based on the same inventive concept and can achieve the same technical effects. Therefore, other specific details of the embodiment for the distributed antenna system can be found in the description of the aforementioned embodiment of the frequency band licensing method for a distributed antenna system.

It should be noted that the above embodiments can be freely combined as needed. The above descriptions are merely some embodiments of the present disclosure. It should be pointed out that for those skilled in the art, several improvements and modifications can be made without departing from the principle of the present disclosure, and these improvements and modifications should also be considered within the scope of the present disclosure.

## Claims

1. A frequency band licensing method for a distributed antenna system including a near-end device and one or more remote devices, the one or more remote devices being connected to the near-end device, wherein the frequency band licensing method comprises:
obtaining, by the near-end device, an activation code for a frequency band to be licensed;
obtaining, by the near-end device, frequency band licensing information based on the activation code; and
notifying, by the near-end device, the one or more remote devices to activate a radio frequency link corresponding to frequency band information in the frequency band licensing information.

2. The frequency band licensing method according to claim 1, wherein:
the distributed antenna system further includes one or more relay devices connected to the near-end device, and each of the one or more remote devices being connected to the near-end device through one of the one or more relay devices;
the activation code is a ciphertext containing the frequency band licensing information; and
the method further comprises:
obtaining, by the near-end device, the frequency band licensing information by decrypting the activation code; and
sending, by the near-end device, a frequency band activation message to the one or more relay devices, the frequency band activation message containing the frequency band information from the frequency band licensing information, and
the one or more relay devices notifying the one or more remote devices connected therewith to activate the radio frequency link corresponding to the frequency band information.

3. The frequency band licensing method according to claim 2, wherein:
the frequency band activation message further includes an activation code type; and
the one or more relay devices notifying the one or more remote devices connected therewith to activate the radio frequency link corresponding to the frequency band information comprises:
when the activation code type is a standard version, the one or more relay devices notifying the one or more remote devices connected therewith to activate the radio frequency link corresponding to the frequency band information; or
when the activation code type is a professional version, the one or more relay devices notifying the one or more remote devices connected therewith to activate both the radio frequency link and a maintenance link corresponding to the frequency band information.

4. The frequency band licensing method according to claim 2, wherein:
the frequency band licensing information further includes a number of the one or more remote devices; and
the frequency band activation message further includes the number of the one or more remote devices in the frequency band licensing information; and
the one or more relay devices notifying the one or more remote devices connected therewith to activate the radio frequency link corresponding to the frequency band information comprises:
a quantity of the one or more remote devices being notified by the one or more relay devices is not greater than the number of the one or more remote devices in the frequency band licensing information.

5. The frequency band licensing method according to claim 2, wherein:
the frequency band licensing information further includes identification codes of the one or more relay devices; and
sending, by the near-end device, the frequency band activation message to the one or more relay devices includes:
sending, by the near-end device, the frequency band activation message to the one or more relay devices with a specified identification code in the frequency band licensing information.

6. A frequency band licensing method for a distributed antenna system including a near-end device, one or more relay devices connected to the near-end device, and one or more remote devices connected to each of the one or more relay devices, wherein the frequency band licensing method comprises:
obtaining, by the one or more relay devices, the activation code for the frequency band to be licensed, and obtaining the frequency band licensing information based on the activation code; and
notifying, by the one or more relay devices, the one or more remote devices connected to the one or more relay devices to activate a radio frequency link corresponding to frequency band information in the frequency band licensing information.

7. A frequency band licensing method for a distributed antenna system including a network management center and one or more sets of distributed antenna apparatuses, each of the one or more sets of distributed antenna apparatuses including a near-end device and one or more remote devices connected to the near-end device, wherein the frequency band licensing method comprises:
obtaining, by the network management center, identification codes of the one or more sets of distributed antenna apparatuses and an activation code for a frequency band to be licensed in the one or more sets of distributed antenna apparatuses identified by the identification codes;
sending, by the network management center, a first activation message to a target set of the one or more sets of distributed antenna apparatuses with a specified identification code, the first activation message including the activation code for the frequency band to be licensed;
receiving, by the near-end device of the target set of distributed antenna apparatuses with the specified identification code, the first activation message and obtaining the activation code for the frequency band to be licensed from the first activation message; and
activating, by the near-end device of the target set of distributed antenna apparatuses with the specified identification code, a radio frequency link in the target set of distributed antenna apparatuses corresponding to frequency band information according to the activation code for the frequency band to be licensed.

8. The frequency band licensing method according to claim 7, wherein the frequency band licensing method further comprises:
obtaining, by the network management center, a license term of the frequency band to be licensed, wherein the first activation message further includes the license term of the frequency band to be licensed;
receiving, by the near-end device of the target set of distributed antenna apparatuses, the first activation message, and obtaining the activation code of the frequency band to be licensed and the license term of the frequency band from the first activation message; and
activating, by the near-end device of the target set of distributed antenna apparatuses, the radio frequency link in the target set of distributed antenna apparatuses corresponding to the frequency band information according to the activation code of the frequency band to be licensed, and issuing a corresponding prompt message when the license term of the frequency band is approaching expiration.

9. A distributed antenna system, wherein the distributed antenna system comprises a near-end device and one or more remote devices connected with the near-end device,
and wherein the near-end device obtains an activation code for a frequency band to be licensed, obtains frequency band licensing information based on the activation code, and notifies the one or more remote devices to activate a radio frequency link corresponding to frequency band information in the frequency band licensing information.

10. A distributed antenna system, wherein the distributed antenna system comprises a near-end device, one or more relay devices connected with the near-end device, and one or more remote devices connected with each of the one or more relay devices, and wherein the one or more relay devices obtain an activation code for a frequency band to be licensed, obtain frequency band licensing information based on the activation code, and notifies the one or more remote devices connected therewith to activate a radio frequency link corresponding to frequency band information in the frequency band licensing information.

11. A distributed antenna system, wherein the distributed antenna system comprises a network management center and one or more sets of distributed antenna apparatuses, each of the one or more sets of distributed antenna apparatuses including a near-end device and one or more remote devices connected to the near-end device,
and wherein the network management center obtains identification codes of the one or more sets of distributed antenna apparatuses and an activation code for a frequency band to be licensed in the one or more sets of distributed antenna apparatuses identified by the identification codes, and sends a first activation message to a target set of the one or more sets of distributed antenna apparatuses with a specified identification code, the first activation message including the activation code for the frequency band to be licensed;
and wherein the near-end device of the target set of distributed antenna apparatuses with the specified identification code receives the first activation message and obtains the activation code for the frequency band to be licensed from the first activation message, and activates a radio frequency link in the target set of distributed antenna apparatuses corresponding to frequency band information according to the activation code for the frequency band to be licensed.
